# EUROPÄISCHE PATENTANMELDUNG

(11) **EP 1 745 697 A1**
(43) Veröffentlichungstag der Anmeldung: **24.01.2007**
(21) Anmeldenummer: 06015278.2
(22) Anmeldetag: 21.07.2006
(51) Int. Cl.: A01M 1/02, A01M 1/08

(54) **Vorrichtung zum Anlocken von Insekten und Anordnung zum Anlocken und Fangen von Insekten**

(30) Priorität: 22.07.2005 DE 102005035005
(71) Anmelder: BioGents GmbH, 93053 Regensburg (DE)
(72) Erfinder: Geier, Martin, Dr., 93053 Regensburg (DE); Rose, Andreas, Dr., 93053 Regensburg (DE)
(74) Vertreter: Benninger, Johannes

(57) **Zusammenfassung**

Es wird eine Vorrichtung zum Fangen von Insekten, insbesondere von Flug- und/oder Schädlingsinsekten, vorgeschlagen, die eine CO₂-Quelle (54) aufweist.

Es ist vorgesehen, dass die CO₂-Quelle (54) eine räumlich inhomogene CO₂- Emission (58) erzeugt.

Weiterhin wird eine Anordnung zum Anlocken und Fangen von Insekten, insbesondere von Flug- und/oder Schädlingsinsekten vorgeschlagen

Es ist vorgesehen, dass die Anordnung zum Anlocken und Fangen von Insekten mindestens eine erfindungsgemäße Vorrichtung zum Anlocken von Insekten und mindestens eine Insektenfalle zum Festhalten, Fangen und/oder Abtöten von angelockten Insekten umfasst.

Derartige Lockvorrichtungen und Anordnungen zum Anlocken und Fangen von Insekten werden zur Schädlingsbekämpfung in geschlossenen Räumen und im Freien sowie zur Erfassung einer Insektendichte (Monitoring) eingesetzt.

## Beschreibung

Die Erfindung betrifft eine Vorrichtung zum Anlocken von Insekten, insbesondere für Flug- und/oder Schädlingsinsekten, mit den Merkmalen des unabhängigen Patentanspruchs 1 sowie eine Anordnung zum Anlocken und Fangen von Insekten, insbesondere von Flug- und/oder Schädlingsinsekten, gemäß unabhängigem Patentanspruch 3.

Blutsaugende Insekten zählen zu den bedeutendsten Hygieneschädlingen weltweit, da sie zahlreiche Krankheiten auf Mensch (bspw. Malaria, Gelbfieber, Dengue u.a.) und Tiere übertragen und zudem ausgesprochen lästig sein können. Eine Möglichkeit zur großflächigen Bekämpfung dieser Schädlinge ist der Einsatz von Insektiziden. Eine weitere Möglichkeit zur Kontrolle und Bekämpfung von Schadinsekten ist der Einsatz von Fallensystemen, die sich jedoch vorwiegend nur für kleinere Bereiche, insbesondere für geschlossene Räume eignen.

Insektenanlockvorrichtungen und Insektenfallen sind in vielen Ausführungsformen und Varianten bekannt.

Einfache Varianten bestehen beispielsweise in Leimruten, die mit Lockstoffen versehen sind und auf denen die Insekten nach einem Kontakt festgehalten werden. Andere Varianten emittieren ultraviolettes Licht oder Ultraschall und versuchen auf diese Weise, Schadinsekten anzulocken. Es sind auch Vorrichtungen bekannt, die Geruchs- und Lockstoffe aussenden, beispielsweise mit Hilfe einer Luftströmung, wonach die dadurch angelockten Insekten mit Hilfe einer gegensinnigen Luftströmung in einen Hohlraum eingesaugt und dort gefangen gehalten werden.

Derartige Fallensysteme sind beispielsweise in der US 2001/004 50 51 A1 und in der US 62 86 249 B1 beschrieben. Bei dieser Fallenart wird ein Lockstoff durch ein innerhalb eines zylindrischen Rohres angeordneten Gebläses verteilt und soll für das Anlocken von Insekten sorgen. Sobald diese in die Nähe der Falle gelangen, werden sie durch einen Luftstrom angesaugt und in das Innere der Falle gezogen. Hierzu ist um das zylindrische Rohr ein weiteres Rohr angeordnet. Im Zwischenraum zwischen den beiden konzentrisch angeordneten Rohren wird eine Saugströmung erzeugt, die für das Ansaugen der Insekten in das Falleninnere sorgt.

Eine weitere Falle diesen Typs ist in der DE 102 59 651 A1 offenbart. Die hier offenbarten Lockmechanismen umfassen eine dunkle Kontrastfläche innerhalb einer hellen Stirnfläche der Insektenfalle, wobei die dunkle Kontraststelle als dunkler Ansaugkanal ausgeführt sein kann und die helle Stirnfläche als Ausströmfläche ausgebildet sein kann. Ein hierdurch erzeugter schwacher Luftstrom nach oben ist ebenfalls ein wirksames Lockmittel. In diesem Luftstrom können Lockstoffe angeboten werden, um die Lockwirkung zu erhöhen.

Bei bekannten Fallenvarianten wird insbesondere Kohlendioxid verströmt, da dieses Gas von den Insekten als Bestandteil der menschlichen und tierischen Atemluft erkannt und damit als attraktiv empfunden wird. Kohlendioxid wird hierbei meist gasförmig oder flüssig vorgelegt und durch einen Ventilator in der Falle oder im Raum verteilt, wodurch es schnell zu einer gleichmäßigen Verteilung der CO₂-Moleküle im Raum bzw. in der Umgebung oder in der Falle kommt.

Die Wirksamkeit und Effektivität der bisher bekannten Fallensysteme ist durchweg verbesserungswürdig, da sie meist nicht für das gewünschte weitgehende Unschädlichmachen der in einem Raum oder in einer Umgebung befindlichen Insekten sorgen können. Zudem sind die Fallensysteme, bei denen Kohlendioxid (CO₂) verströmt wird, relativ teuer in der Anschaffung und im Betrieb.

Ein Ziel der vorliegenden Erfindung besteht darin, eine Vorrichtung zum Anlocken von Insekten zur Verfügung zu stellen, bei der CO₂ als Lockstoff zum Einsatz kommt und die dennoch kostengünstig und einfach aufgebaut und dabei möglichst effektiv ist.

Ein weiteres Ziel der Erfindung besteht darin, eine Anordnung zum Anlocken und Fangen von Insekten zur Verfügung zu stellen, die möglichst effektiv ist.

Die Ziele der Erfindung werden mit den Gegenständen der unabhängigen Patentansprüche erreicht. Merkmale vorteilhafter Weiterbildungen der Erfindung ergeben sich aus den jeweiligen abhängigen Ansprüchen.

Eine erfindungsgemäße Vorrichtung zum Anlocken von Insekten, insbesondere von Flug- und/oder Schädlingsinsekten, umfasst wenigstens eine lokal begrenzte CO₂₋Quelle, die eine räumlich inhomogene CO₂-Emission erzeugt.

Der erfindungsgemäßen Vorrichtung zum Anlocken von Insekten liegt die Beobachtung zugrunde, dass die Lockwirkung von CO₂ auf Fluginsekten deutlich erhöht ist, wenn es nicht, wie üblich, in einem breiten Volumenstrom mit weitgehend gleichmäßiger Molekülverteilung angeboten wird, sondern stattdessen inhomogen im Raum verteilt vorliegt.

Hierzu kann es bspw. in Form von feinen Filamenten aus einer lokal begrenzten, bspw. einer punktförmigen Quelle entlassen werden. Derartige filamentartige Gasströme sind gekennzeichnet durch einen schlierenartigen Verlauf der "Gasfahne", innerhalb derer in der Nähe ihrer Ursprungsquelle punktuell sehr hohe CO₂-Konzentrationen (und damit ein geringer CO₂-Volumenstrom, d. h. ein geringes Volumen CO₂, das sich innerhalb einer Zeiteinheit durch einen Querschnitt bewegt) herrschen. Im Strömungsverlauf und mit steigendem Abstand zur Quelle werden die Gasfilamente zunehmend zerstört und durch Luftturbulenzen verdünnt.

Es konnte gezeigt werden, dass das Erkennen von CO₂₋Konzentrationsunterschieden, wie sie bspw. in derartigen filamentartigen Gasströmen vorkommen, bei Insekten von einem starken neuronalen Signal begleitet ist, das allein durch eine gleichmäßige CO₂-Konzentration, unabhängig von deren Höhe, nicht erreichbar ist. Die Lockwirkung von CO₂ auf Insekten beruht offensichtlich weniger auf der absoluten CO₂-Konzentration als vielmehr auf Schwankungen in den Konzentrationen, wie sie bspw. durch die filamentartige CO₂-Verteilung vorhanden sind. Mit steigender Anzahl der Filamente in der Gasfahne erhöht sich die Wirksamkeit des CO₂-Gases als Lockstoff.

Eine mögliche Form einer CO₂-Quelle zur Erzeugung einer räumlich inhomogenen CO₂-Emission, die im Rahmen der vorliegenden Erfindung zum Einsatz kommen kann, wird im Folgenden beispielhaft beschrieben. Der Einsatz einer jeden anderen Anordnung, die eine inhomogene CO₂-Verteilung im Raum erzeugt, ist im Rahmen der Erfindung jedoch ebenfalls denkbar.

Als CO₂-Quelle kann bspw. Trockeneis dienen, das in einer Isolierungseinrichtung gelagert ist. Bspw. kann für den vorliegenden Zweck eine handelsübliche Thermosflasche als Isolierbehälter verwendet werden. Vorzugsweise weist diese Isolierungseinrichtung eine Abdeckung auf, die ebenfalls isolierend sein kann. Gasförmiges CO₂ entsteht durch Sublimation des Trockeneises. Dieses wird über eine Ausleitungseinrichtung, bspw. einen Schlauch, dessen eines Ende in den Isolierbehälter hinein ragt und dessen anderes Ende aus diesem heraus ragt, nach außen geleitet. Da das gasförmige CO₂ lediglich unter Wirkung des Dampfdrucks im Isolierbehälter nach außen geleitet wird, und bspw. kein Ventilator zur Ausleitung eingesetzt wird, kommt es während des Ausleitens nicht zu einer Vermischung des CO₂ mit Luft, so dass es in Form von Filamenten nach außen tritt und sich schlierenartig verteilt.

Der Volumenstrom in der Ausleitungseinrichtung, das heißt, das Volumen an CO₂, das sich innerhalb einer Zeiteinheit durch den Durchmesser der Ausleitungseinrichtung bewegt, und somit der Austritt von Gasfilamenten kann durch die Auswahl der Isolierungseinrichtung sowie über die Form und den Durchmesser der Öffnung der Ausleitungseinrichtung, bspw. des Schlauches, gesteuert werden.

Die Isolierleistung der lsolierungseinrichtung ist verantwortlich für den in der Isolierungseinrichtung herrschenden Gasdruck. Eine schlechte Isolierleistung führt zu vermehrter Sublimation des Trockeneises und somit zu einem höheren Gasdruck als eine gute Isolierleistung, bei der die Sublimation deutlich langsamer erfolgt. Ein höherer Dampfdruck in der Isolierungseinrichtung hat einen erhöhten Volumenstrom in der Ausleitungseinrichtung zur Folge.

Eine große Austrittsöffnung der Ausleitungseinrichtung, bspw. ein großer Schlauchdurchmesser führt dazu, dass sich der CO₂-Volumenstrom in der Einrichtung verringert. Das aus der Öffnung tretende CO₂ "fällt", da es schwerer ist als Luft, unmittelbar nach seinem Austritt nach unten und vermischt sich schnell mit der Luft, so dass eine inhomogene Gasverteilung nicht über eine längere Zeitdauer aufrecht erhalten bleibt.

Im Gegensatz dazu erhöht eine kleine Austrittsöffnung der Ausleitungseinrichtung, bspw. ein kleiner Schlauchdurchmesser den CO₂₋Volumenstrom in der Ausleitungseinrichtung. Die resultierende Wirkung ist ähnlich einer Düse, so dass ein unmittelbares Abfallen der austretenden Gasfilamente verhindert wird. Die derart erzeugte "Gasfahne" kann nach oben gerichtet sein und es tritt keine schnelle Vermischung mit umgebender Luft ein. Die Gasfilamente und somit die gewünschten, räumlichen Konzentrationsunterschiede bleiben über eine bestimmte Zeitdauer erhalten.

Ein zu kleiner Durchmesser der Ausleitungseinrichtung erlaubt jedoch einen zu geringen CO₂-Austritt, so dass eine gewisse Mindestgröße für die Austrittsöffnung besteht.

Die Ausleitungseinrichtung ist gemäß einer Ausführungsform der Erfindung ein Schlauch mit einem Durchmesser zwischen 1 und 5 mm. Unter Verwendung einer handelsüblichen Isolierkanne zur Lagerung des Trockeneises wurde ein CO₂₋Volumenstrom von 5 ml/min bis 500 ml/min erzeugt. Bevorzugt werden Volumenströme von 50 ml/min bis 500 ml/min verwendet.

Um CO₂ zu sparen, kann die CO₂-Ausleitung aus dem Trockeneis-Behälter auch in gepulster Form, also mit Unterbrechungen erfolgen, bspw. indem der Schlauch mit einem steuerbaren Ventil, bspw. einem Überduckventil versehen ist.

Die erfindungsgemäße Vorrichtung zum Anlocken von Insekten, insbesondere von Flug- und/oder Schädlingsinsekten, kann für unterschiedliche Einsatzzwecke verwendet werden. Insbesondere ist sie mit einer im Wesentlichen beliebig gestalteten Insektenfalle zu einer Anordnung zum Anlocken und Fangen von Insekten, insbesondere von Flug- und/oder Schädlingsinsekten, kombinierbar. Hierbei kann die erfindungsgemäße Vorrichtung für das Anlocken von Insekten in die Nähe der Falle sorgen, oder einen anderen, in die Falle integrierten Anlockmechanismus unterstützen und verstärken. Sobald die Insekten die nahe Umgebung der erfindungsgemäßen Vorrichtung und der Falle erreicht haben, wirken jedoch weniger die CO₂₋Verteilungsmuster auf die Insekten als vielmehr andere Reize wie Duft, Helligkeit oder Kontrast. Die erfindungsgemäße Vorrichtung hat also insbesondere eine relative Fernwirkung und ist zum Anlocken von Insekten, insbesondere von Flug- und/oder Schädlingsinsekten über relativ weite Strecken geeignet; für das Fangen selbst sind dann andere Lockeinrichtungen von Vorteil.

Eine Kombination der erfindungsgemäßen Vorrichtung zum Anlocken von Insekten, insbesondere von Flug- und/oder Schädlingsinsekten, mit einer Insektenfalle gemäß der DE 102 59 651 A1 ist eine besonders bevorzugte Ausführungsform der erfindungsgemäßen Anordnung.

Die derartige Insektenfalle, die insbesondere zum Anlocken von Flug- und/oder Schädlingsinsekten dient, weist eine ebene oder eine gewölbte, helle Fläche und wenigstens eine innerhalb dieser Fläche angeordnete, dunkle Kontraststelle auf. Die Insektenfalle weist weiterhin Einrichtungen zum Festhalten, Fangen und/oder zum Abtöten von angelockten Insekten auf einer Oberfläche der Falle und/oder in einem darin angeordneten Hohlraum auf. Bei dieser ersten Variante einer Insektenfalle wird sich die Erkenntnis zu Nutze gemacht, dass dunkle Objekte für viele Insekten eine Signalwirkung haben und diese anlocken. Versuche mit dieser erfindungsgemäßen Fallenvariante haben gezeigt, dass eine helle Oberfläche mit einem darin angeordneten dunklen Fleck, bspw. in deren Mitte, für bestimmte Insekten sehr attraktiv ist und diese anlockt. Bisher war lediglich bekannt, dass dunkle Objekte in der Lage sein können, bestimmte Insektenarten anzulocken. Die Erfindung macht sich die bessere Signalwirkung einer dunklen Kontraststelle auf einer hellen Oberfläche zu Nutze.

Eine Variante einer derartigen Insektenfalle weist eine Ausströmfläche zur Erzeugung bzw. zur Abgabe einer von der Fläche ausgehenden, schwachen Luftströmung sowie Einrichtungen zum Festhalten, Fangen und/oder Abtöten von angelockten Insekten auf einer Oberfläche der Falle und/oder in einem darin angeordneten Hohlraum auf. Bei Versuchen hat sich der überraschende Effekt gezeigt, dass eine großflächige, schwache und gleichmäßig verteilte Luftströmung für viele Schadinsekten ebenfalls attraktiv ist und diese anlocken kann. Erklären lässt sich dies damit, dass die großflächige, schwache Luftströmung einer von einem menschlichen oder tierischen Körper abgegebenen Wärmeströmung gleicht, die von vielen Insekten, insbesondere von Stechmücken (aedes aegypti) und Blut saugenden Insekten erkannt und als attraktiv empfunden wird.

Die beiden genannten Varianten der Erfindung können wahlweise auch miteinander kombiniert werden, indem eine helle Fläche mit einer dunklen Kontraststelle gleichzeitig mit einer Ausströmfläche versehen oder als solche ausgebildet ist. Hierdurch lässt sich die Effektivität der Falle weiter verbessern.

Eine Ausführungsform der erfindungsgemäßen Insektenfalle sieht vor, dass zumindest die helle Fläche mit Leim und/oder einem Insektizid versehen ist. Zusätzlich kann auch die dunkle Kontraststelle mit Leim und/oder einem Insektizid versehen sein, so dass die Oberfläche der Falle als Haftmittel für die angelockten Insekten fungieren kann. Alternativ können die Insekten bei einem Kontakt mit einer Fallenoberfläche abgetötet werden. Dies kann auch durch eine Beaufschlagung einer Oberfläche der Insektenfalle mit einer elektrischen Spannung, beispielsweise mit Hilfe eines unter Spannung stehenden Drahtgitters oder dergleichen erreicht werden.

Die von der Ausströmfläche emittierte, schwache Luftströmung weist vorzugsweise eine mittlere Strömungsgeschwindigkeit zwischen 2 und 100 cm/s, besser zwischen 3 und 50 cm/s, vorzugsweise jedoch von 5 bis 20 cm/s auf, so dass die schwache Luftströmung besonders gut die von einem menschlichen oder tierischen Körper erzeugte Konvektionsströmung der Luft imitieren kann.

Eine besonders bevorzugte Variante der Insektenfalle sieht vor, dass zusätzlich von der Falle ein Lockstoff emittiert wird. Hierbei wird sich die Erkenntnis zunutze gemacht, dass der Geruch eines menschlichen oder tierischen Körpers für Insekten dann besonders attraktiv ist, wenn er in einer schwachen, gleichmäßig verteilten Luftströmung transportiert wird. Es sind Fallen bekannt, mit denen Kohlendioxid verteilt wird. Dies ist ein Lockstoff, der auch in der Atemluft enthalten ist. Eine derartige Kohlendioxidabgabe ist dann für Insekten besonders attraktiv, wenn die Strömung diskontinuierlich ist und in Duftfilamenten angeboten wird. Dies kann mittels einer erfindungsgemäßen Vorrichtung zum Anlocken von Insekten geschehen. Dagegen wird ein den Hautgeruch imitierender Lockstoff insbesondere dann von den Insekten als attraktiv empfunden, wenn er in einer schwachen Luft- bzw. Konvektionsströmung transportiert wird.

Vorzugsweise kann der Lockstoff von Teilen oder der gesamten hellen Fläche emittiert werden. Der Lockstoff kann beispielsweise in einer Beschichtung der hellen Fläche gebunden und in einer definierbaren Konzentration abgegeben werden. Hierfür eignet sich beispielsweise ein Bindemittel auf der hellen und/oder dunklen Fläche, in dem die flüchtigen Lockstoffe gelöst sind und in definierbarer Konzentration abgegeben werden. Ein solches Bindemittel kann insbesondere Leim sein, auf dem anfliegende Insekten haften bleiben. Damit der Lockstoff gleichmäßig abgegeben wird und in einer Konvektionsströmung transportiert wird, kann eine Beheizung der Fallenoberfläche vorgesehen sein, bspw. mittels Heizdrähten oder dergleichen.

Eine besonders bevorzugte Variante der Insektenfalle sieht eine Kombination der olfaktorischen und der visuellen Reize für die Insekten vor. Eine solche bevorzugte Ausführungsform der Erfindung sieht vor, dass die Ausströmfläche als helle Fläche mit wenigstens einer innerhalb dieser angeordneten, dunklen Kontraststelle ausgebildet ist. Die helle Fläche weist eine Größe von typischerweise wenigstens 30 cm² auf, sollte vorzugsweise jedoch eine Größe von mindestens 100 cm² aufweisen, um den gewünschten Effekt auch auf größerer Entfernung auszuüben. Eine solch kombinierte, optische und olfaktorische Wirkung der erfindungsgemäßen Insektenfalle imitiert besonders gut menschliche und tierische Körper, so dass eine solche Falle eine hohe Attraktivität und damit eine hohe Wirksamkeit für viele Insekten, insbesondere für Blut saugende Arten, aufweist.

Eine weitere Ausführungsform der Erfindung sieht vor, dass wenigstens eine Ansaugöffnung zum Ansaugen von angelockten Insekten vorgesehen ist. Alternativ können auch mehrere Ansaugöffnungen um die helle Fläche bzw. um die Ausströmfläche angeordnet sein. Es kann insbesondere auch eine ringförmige Ansaugöffnung um die helle Fläche ausgebildet sein. Hierdurch können die angelockten Insekten in einen Hohlraum oder einen Behälter eingesaugt werden, in dem sie gesammelt und aus dem sie nicht mehr fliehen können. Gegebenenfalls kann in diesem Hohlraum ein Insektizid eingebracht sein, so dass die Insekten an Ort und Stelle abgetötet werden.

Eine bevorzugte Ausgestaltung der Erfindung sieht vor, dass die dunkle Kontraststelle als dunkler Ansaugkanal ausgebildet ist. D.h., eine Innenmantelfläche des rohrförmigen Ansaugkanals ist vorzugsweise dunkel beschichtet, so dass der Ansaugkanal selbst als dunkle Kontraststelle auf der hellen Fläche wirken kann. Eine Strömungsgeschwindigkeit am bzw. im Ansaugkanal bzw. in der wenigstens einen Ansaugöffnung beträgt vorzugsweise mehr als 1 m/s und kann in bevorzugter Ausgestaltung ca. 2 m/s betragen. Auf diese Weise kann sichergestellt werden, dass Insekten, die in die Nähe des Ansaugkanals oder der Ansaugöffnung gelangen, zuverlässig eingesaugt werden und nicht mehr fliehen können. Gleichzeitig wird sichergestellt, dass die Insekten nicht gegen die Luftströmung anfliegen können und beispielsweise nach ihrem Fangen den Hohlraum wieder verlassen können.

Eine weitere bevorzugte Ausführungsform der Erfindung sieht wenigstens einen in der Falle angeordneten Ventilator zur Erzeugung der Ansaugströmung und/oder der schwachen Luftströmung aus der Ausströmfläche vor. Der Ventilator kann insbesondere eine Ringströmung erzeugen, wobei ein Sog durch die Ansaugöffnung bzw. durch den Ansaugkanal erzeugt und die hier eingesaugte Luft wieder über die größere Ausströmfläche als gleichmäßige, schwache Luftströmung abgegeben wird. Die Größenverhältnisse des Ansaugkanals und der Ausströmfläche müssen in diesem Fall so aufeinander abgestimmt werden, dass die gewünschten Luftgeschwindigkeiten erreicht werden.

Vorzugsweise ist eine innerhalb der Falle angeordnete Einrichtung zur gleichmäßigen Abgabe des Lockstoffs vorgesehen. Eine solche Einrichtung kann insbesondere aus mehreren Flakons mit den Einzelkomponenten des Lockstoffs oder aus unterschiedlichen Röhrchen mit darin angeordneten Lockstoffkomponenten bestehen, da der Lockstoff typischerweise nicht als Gemisch, sondern in Einzelkomponenten aufbewahrt werden muss und erst bei der Abgabe an die Luft zu einem Lockstoffgemisch wird. Als derartiger Lockstoff kommt insbesondere ein Gemisch aus Milchsäure, Capronsäure und Ammoniak in Frage, wie er beispielsweise in der provisorischen US-Anmeldung Nr. 60/386,582 vom 07.06.2002 offenbar ist. Die in dieser Anmeldung genannten Wirkstoff- und Lockstoffkombinationen und -gemische werden hiermit ausdrücklich in den Offenbarungsumfang der vorliegenden Anmeldung miteinbezogen.

Die Ausströmfläche kann eine Bespannung mit einem hellen Gewebe aufweisen, deren Maschenweite kleiner ist als die Größe der angelockten Insekten. Auf diese Weise kann einerseits die helle Fläche gebildet und andererseits die Falle nach außen hin abgeschlossen werden, so dass darin gefangene Insekten nicht mehr durch das Gewebe hindurchfliegen können.

Der Ansaugkanal weist vorzugsweise eine Mindestlänge auf, die eine ausreichend gleichmäßige Strömung im Kanal und in unmittelbarer Nähe des Kanals bewirkt. Eine typische Länge des Ansaugkanals kann beispielsweise zwischen 5 und 10 cm oder mehr betragen. Ein typischer Durchmesser des Ansaugkanals kann beispielsweise zwischen 3 und 15 cm betragen. Die Abmessungen der Ausströmfläche und des Ansaugkanals richten sich insbesondere nach der gewünschten Größe der Falle und nach den gewünschten Verhältnissen der Strömungsgeschwindigkeiten im Kanal und aus der Ausströmrichtung. Auch die typische Größe der bevorzugt angelockten Insekten beeinflusst die sinnvollen Abmessungen des Ansaugkanals und der Falle.

Eine Ausgestaltung der Erfindung sieht eine zusätzliche Gewebebespannung vor dem Ventilator vor, so dass die angesaugten Insekten nicht in das Falleninnere gelangen, sondern an der Unterseite des Ansaugkanals gesammelt werden. Eine vorteilhafte Ausgestaltung sieht ein Einsatzmodul vor dem Ventilator im Kanal vor, das gegebenenfalls mit einem Klebstoff oder mit einem Insektizid versehen sein kann und das in regelmäßigen Abständen aus der Falle entnommen und entleert werden kann. Um zu verhindern, dass die angesaugten Insekten wieder fliehen können, kann bspw. sichergestellt werden, dass das Ventilatorgebläse permanent läuft. Soll der Ventilator nicht permanent laufen, kann es vorteilhaft sein, eine reusenartigen Fangbehälter vorzusehen, aus dem die Insekten nicht mehr fliehen können. Bei einer solchen Variante kann das Gebläse wahlweise in einem Intervallbetrieb laufen.

Eine bevorzugte Form der erfindungsgemäßen Insektenfalle sieht einen hohlzylindrischen Körper mit stirnseitig angeordneter Ausströmfläche und einen ins Innere des hohlzylindrischen Körpers führenden, dunklen Ansaugkanal vor. Die Stirnfläche kann wahlweise nach außen oder nach innen gewölbt sein. Weiterhin ist vorzugsweise eine geschlossene Bodenfläche mit darauf angeordneter Einrichtung zur Abgabe des Lockstoffs vorgesehen.

Die Stirnfläche der hohlzylindrischen Falle weist vorzugsweise nach oben. Die Falle weist damit gegenüber einer Falle, die Kohlendioxid verströmt, den Vorteil einer besseren Erkennbarkeit für Insekten auf, da diese die helle Oberfläche bzw. den ausströmenden Lockstoff besser wahrnehmen können als bei einer nach unten weisenden Wirkfläche der Falle. Kohlendioxidfallen verströmen dieses normalerweise nach unten, da das CO₂ schwerer als Luft ist und nach unten sinkt.

Eine Insektenfalle der beschriebenen Art kann mit einer erfindungsgemäßen Vorrichtung zum Anlocken von Insekten kombiniert werden, um ihre Wirksamkeit weiter zu erhöhen. Die Anordnung der erfindungsgemäßen Vorrichtung zum Anlocken von Insekten an der Insektenfalle erfolgt bevorzugt in der Art, dass die CO₂-Austrittsöffnung in der Nähe der Luftausströmöffnung und/oder der Kontrastflächen an der Oberfläche der Insektenfalle angeordnet ist. Hierzu kann die Ausleitungseinrichtung, bspw. der CO₂-Austrittsschlauch, derart seitlich oder an einer Oberseite der Insektenfalle angeordnet sein, dass sich ihre Öffnung so weit oberhalb und/oder neben der Emissionsfläche der Falle befindet, dass die dort wirkenden Strömungen nicht die erfindungsgemäße inhomogene bzw. filamentartige CO₂-Verteilung zerstören. Insbesondere bei dem Fallentyp, der eine Einsaugströmung zum Einsaugen zu fangender Insekten aufweist, ist ein genügend großer Abstand zwischen der Fallenöffnung und der CO₂-Austrittsöffnung zu wahren, damit das ausströmende CO₂ nicht sofort in die Falle eingesaugt wird. Bspw. kann an einer Seitenfläche und/oder der Oberseite der Insektenfalle wenigstens eine Halterung für die Ausleitungseinrichtung angeordnet sein. Der Isolierbehälter der erfindungsgemäßen Vorrichtung zum Anlocken von Insekten kann unabhängig von der Falle bspw. neben dieser angeordnet sein.

Es sind weitere unterschiedliche Kombinationen von Insektenfallen und erfindungsgemäßen Lockvorrichtungen denkbar. Bspw. kann eine Insektenfalle mit mehreren Lockvorrichtungen kombiniert sein, oder eine Lockvorrichtung kann mit mehreren Insektenfallen kombiniert sein.

Die erfindungsgemäßen Anordnungen zum Anlocken und Fangen von Insekten eignen sich nicht nur zur Schädlingsbekämpfung in geschlossenen Räumen und im Freien, sondern auch zur Erfassung einer Insektendichte in einem bestimmten Gebiet. Bei diesem sog. Monitoring werden derartige Fallenanordnungen in einem zu überwachenden Gebiet während einer vorbestimmten Zeitdauer aufgestellt, wonach die Menge der gefangenen Insekten gemessen wird. Dieses Monitoring kann insbesondere dazu dienen, die Notwendigkeit bzw. die Effektivität von Schädlingsbekämpfungsmaßnahmen vor deren Durchführung zu bestimmen und/oder nachträglich zu messen.

Die Erfindung wird nachfolgend anhand bevorzugter Ausführungsbeispiele unter Bezugnahme auf die beiliegenden Zeichnungen näher erläutert.

Fig. 1 zeigt eine schematische Querschnittansicht einer erfindungsgemäßen Vorrichtung zum Anlocken von Insekten.

Fig. 2 zeigt eine schematische Perspektivdarstellung einer Anordnung zum Anlocken und Fangen von Insekten.

Figuren 3 und 4 zeigen alternative Varianten von Anordnungen zum Anlocken und Fangen von Insekten in schematischen Querschnittdarstellungen.

Figuren 5 und 6 zeigen schematische Darstellungen unterschiedlicher Kombinationen von Insektenfallen und Lockvorrichtungen.

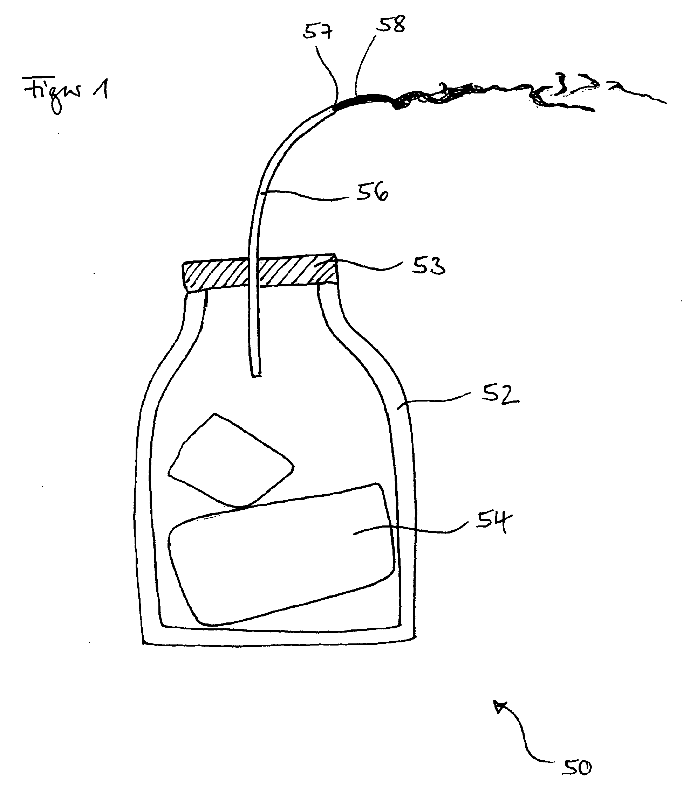

Die Fig. 1 zeigt eine schematische Querschnittansicht einer erfindungsgemäßen Vorrichtung 50 zum Anlocken von Insekten. Diese umfasst einen Isolierbehälter 52 mit Deckel 53, in dem sich Trockeneis 54 befindet, welches durch Sublimation in die Gasphase übergeht. Das gasförmige CO₂ wird unter Wirkung des Dampfdrucks in dem Isolierbehälter 52 über den Ausleitungsschlauch 56 aus dem Isolierbehälter 52 herausgeleitet. Der Isolierbehälter 52 und der Schlauch 56 sind bzgl. Isolierleistung und Schlauchdurchmesser so aufeinander abgestimmt, dass der Volumenstrom im Schlauch 56 derart ist, dass das CO₂-Gas in Form eines dünnen Filamentes 58 aus der im Wesentlichen punktförmigen Öffnung 57 austritt und hier nicht sofort nach unten fällt, sondern der Gasstrom vielmehr nach oben geführt sein kann. Auf diese Weise erfolgt nur eine langsame Zerstörung des Gasfilamentes 58 durch ihre Vermischung mit der Luft, wobei sich Schlieren bilden. Das bedeutet, dass die filamentartigen Strukturen im Gasstrom und die damit verbundenen starken lokalen Konzentrationsunterschiede, die von Insekten detektiert werden, für relativ lange Zeit erhalten bleiben.

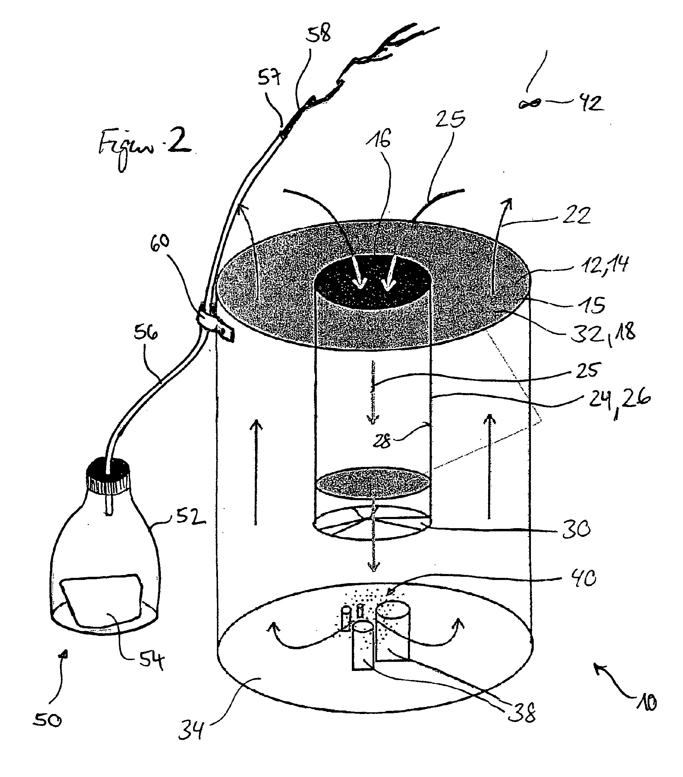

Anhand der Fig. 2 wird ein prinzipieller Aufbau einer beispielhaften Anordnung zum Anlocken und Fangen von Insekten, umfassend eine erfindungsgemäße Vorrichtung 50 zum Anlocken von Insekten und eine Insektenfalle 10 verdeutlicht. Die Insektenfalle 10 umfasst einen Hohlraum 20 innerhalb eines hohlzylindrischen Körpers, dessen Stirnfläche 32 als Fallenoberfläche 18 ausgebildet ist. Die Fallenoberfläche 18 umfasst eine helle Fläche 12, die als Ausströmfläche 14 ausgebildet ist und eine mittig darin angeordnete Kontraststelle 16 aufweist, die im gezeigten Ausführungsbeispiel als Ansaugkanal 26 mit dunkel ausgekleideter Innenmantelfläche 28 ausgebildet ist. Die helle Fläche 12 kann insbesondere durch ein Gewebe 15 gebildet sein, das auf die hohlzylindrische Falle gespannt ist und durch das die schwache Luftströmung 22 nach außen tritt.

Am unteren Ende des Ansaugkanals 26 ist ein Gebläse bzw. ein Ventilator 30 vorgesehen, der die Ansaugströmung 25 in den Hohlraum 20 der Insektenfalle 10 erzeugt. An einer Bodenfläche 34 des Hohlraums 20 sind mehrere Lockstoffbehälter 38 erkennbar, durch die jeweils eine Komponente eines Lockstoffs 40 gleichmäßig und in einer gewünschten Konzentration abgegeben wird, so dass der Lockstoff 40 in einem gewünschten, optimalen Mischungsverhältnis nach außen und in die schwache Luftströmung 22 abgegeben wird. Die helle Fläche 12 und der Durchmesser des Ansaugkanals 26 sind vorzugsweise so aufeinander abgestimmt, dass der einzige Ventilator 30 sowohl für die gewünschte Ansaugströmung von ca. 2 m/s als auch für die gewünschte schwache Luftströmung von ca. 5 bis 20 cm/s sorgen kann. Vorzugsweise ist auch vor dem Ventilator 30 ein Gewebe angebracht, das die Insekten daran hindert, in das Innere der Falle zu gelangen.

Eine besonders vorteilhafte Ausgestaltung kann darin bestehen, dass der Ansaugkanal 26 mit einem Einsatz versehen ist, der entnommen und entleert werden kann, sobald genug Insekten darin gefangen sind.

Die Ansaugluftströmung 25 ist zumindest so stark auszulegen, dass im Nahbereich der Falle 10 befindliche Insekten 42 in den Ansaugkanal 26 eingesaugt werden und diesen nicht mehr verlassen können.

Die Insektenfalle 10 ist um eine erfindungsgemäße Vorrichtung 50 zum Anlocken von Insekten ergänzt. Der Isolierbehälter 52 mit Trockeneis 54 ist neben der Insektenfalle 10 angeordnet. Der Schlauch 56 ist an der Seitenwand der Insektenfalle 10 entlang nach oben geführt und mittels einer Halterung 60, die an der Seitenfläche der Insektenfalle angebracht ist, gestützt und in Position gehalten. Die CO₂₋Austrittsöffnung 57 des Schlauches 56 liegt oberhalb der Ausströmfläche 14 der Insektenfalle 10, und zwar weit genug von der Ausströmfläche 14 und auch von der Ansaugöffnung 24 entfernt, dass die von der Insektenfalle 10 erzeugten Luftbewegungen das CO₂-Filament 58 nicht unmittelbar nach seinem Austritt aus der Öffnung 57 stören.

In der dargestellten Anordnung zum Anlocken und Fangen von Insekten erfolgt zunächst ein über eine relativ weite Distanz wirkendes Anlocken von Insekten mittels der inhomogenen CO₂-Verteilung, die durch die erfindungsgemäße Vorrichtung 50 erzeugt wird. Nachdem die Insekten in die Nähe der Falle 10 gelockt sind, kommen die falleneigenen Lock- und Fangmechanismen (schwache Luftströmung, Ansaugöffnung und dunkler Kontrastkanal) zum Tragen. Die Fangleistung der Insektenfalle 10 wird auf diese Weise deutlich verbessert.

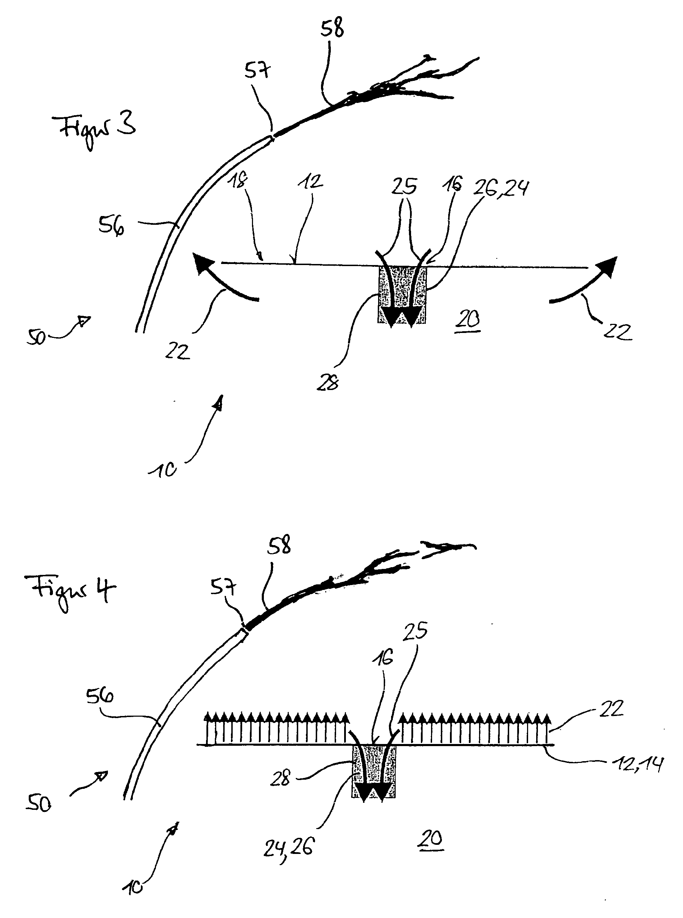

Figuren 3 und 4 zeigen Varianten der erfindungsgemäßen Anordnung aus Lockvorrichtung 50 und Insektenfalle 10 in schematischen Querschnitten.

Die Variante in Fig. 3 sieht eine schwache Luftströmung 22 außerhalb der hellen Fläche 12 vor. Weiterhin ist die Kontraststelle 16 als Ansaugöffnung 24 ausgestaltet, im gezeigten Ausführungsbeispiel als Ansaugkanal 26, durch den eine Ansaugströmung 25 in einen Hohlraum 20 der Insektenfalle 10 erzeugt wird. Die schwache Luftströmung 22 kann bei dieser Variante der Insektenfalle 10 wahlweise als Transportmittel für einen Lockstoff dienen, der für die anzulockenden Insekten attraktiv ist. Der Lockstoff kann insbesondere Ausdünstungen eines menschlichen oder tierischen Körpers nachahmen und aus mehreren Komponenten bestehen, die bei der Abgabe an die Luftströmung 22 zu einem Duftgemisch zusammengesetzt werden.

Die Ansaugströmung 25 ist zumindest so stark, dass in einen Nahbereich der Falle gelangende Insekten in den Ansaugkanal 26 eingezogen werden und diesen nicht mehr verlassen können. Bei einer dunklen Beschichtung einer Innenmantelfläche 28- des Ansaugkanals 26 wirkt dieser als Kontraststelle 16, so dass diese Fallenvariante einen optischen Reiz mit einem mechanischen (Luftströmung) und/oder einem olfaktorischen Reiz (Lockstoff) kombiniert. Mit einer solchen Wirkkombination sind besonders hohe Fangraten erzielbar, da die Insekten auf mehrfache Weise angesprochen und angelockt werden.

Die Lockwirkung wird durch die Kombination mit der Insektenlockvorrichtung 50 weiter verstärkt. Hierzu ist der Schlauch 56 der Insektenlockvorrichtung 50 seitlich neben der Falle 10 geführt. Mittels einer an der Falle 10 angeordneten Halterung 60 wird der Schlauch 56 derart geführt und fixiert, dass die CO₂-Austrittsöffnung in einem einstellbaren Abstand über der hellen Fläche 12 angeordnet ist. Der Abstand zu den Luftbewegungen, die durch die Falle 10 erzeugt werden, muss so groß gewählt sein, dass das CO₂-Filament nicht unmittelbar nach dem Austritt der aus der Öffnung 57 zerstört wird und die schlierenartige CO₂-Verteilung mit ihren starken lokalen Konzentrationsunterschieden möglichst lange erhalten bleibt.

Bei der in Fig. 4 gezeigten weiteren Variante der erfindungsgemäßen Anordnung aus Lockvorrichtung 50 und Insektenfalle 10 ist die helle Fläche 12 als Ausströmfläche 14 ausgestaltet, durch die die schwache Luftströmung 22 hindurch tritt. Die Kontraststelle 16 ist wiederum als dunkel ausgekleidete Ansaugöffnung 24 bzw. - kanal 26 ausgebildet, durch die/den eine stärkere Ansaugströmung 25 mit einer Strömungsgeschwindigkeit von mehr als 1 m/s, vorzugsweise von bis zu 2 m/s oder mehr hindurchtritt. Durch den Ansaugkanal 26 werden die von der schwachen Luftströmung 22 bzw. der Kontraststelle 16 angelockten Insekten in das Falleninnere des Hohlraums 20 angesaugt. Wahlweise kann auch hier die schwache Luftströmung 22 einen Lockstoff transportieren. Die Kombination mit der Lockvorrichtung 50 erfolgt auf die bereits in Fig. 3 dargestellte Art und Weise.

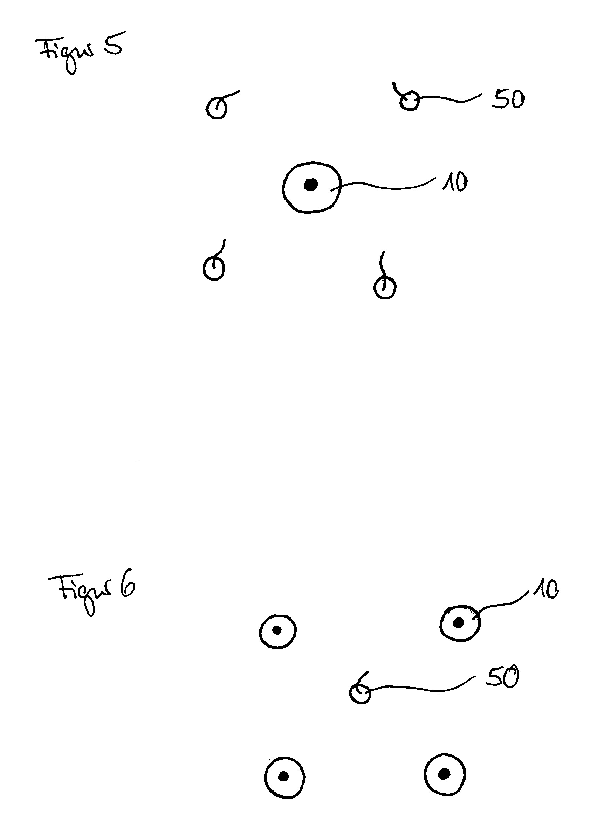

In den Figuren 5 und 6 sind unterschiedliche Kombinationen von Insektenfallen 10 und Lockvorrichtungen 50 schematisch dargestellt. In Fig. 5 ist eine Insektenfalle 10 zentral zwischen vier Lockvorrichtungen 50 positioniert. Die Anzahl der CO₂-Quellen 50 ist frei wählbar, jede andere als die dargestellte Anzahl ist ebenso verwendbar. Eine erhöhte Anzahl von Lockvorrichtungen 50 verbessert die Lockwirkung. In Fig. 6 ist beispielhaft ein umgekehrter Fall dargestellt: Eine Lockvorrichtung 50 befindet sich inmitten von vier Insektenfallen 10. Auch in diesem Fall ist die Anzahl der Insektenfallen frei wählbar. Im Grunde können je nach Anwendungszweck jeweils beliebig viele Insektenfallen und Lockvorrichtungen miteinander kombiniert zum Einsatz kommen. Auch die Anordnung zueinander kann je nach Anwendung variieren.

Die erfindungsgemäße Vorrichtung zum Anlocken von Insekten sowie die erfindungsgemäße Anordnung zum Anlocken und Fangen von Insekten eignet sich insbesondere für Stechmücken, Moskitos und andere stechende und/oder Blut saugende Fluginsektenarten.

## Patentansprüche

1. Vorrichtung zum Anlocken von Insekten, insbesondere von Flug- und/oder Schädlingsinsekten, umfassend wenigstens eine lokal begrenzte CO₂-Quelle, **dadurch gekennzeichnet, dass** die CO₂-Quelle eine räumlich inhomogene CO₂-Emission, insbesondere in Form eines filamentartigen CO₂-Stroms (58) erzeugt.

2. Vorrichtung nach Anspruch 1, **dadurch gekennzeichnet, dass** die CO₂-Quelle zur Erzeugung der räumlich inhomogenen CO₂-Emission in einer Isolierungseinrichtung (52) befindliches Trockeneis (54) aufweist, wobei die räumlich inhomogene CO₂-Emission durch Ableiten der Gasphase von sublimierendem Trockeneis (54) durch einen Schlauch (56) erzeugbar ist.

3. Anordnung zum Anlocken und Fangen von Insekten, insbesondere von Flug- und/oder Schädlingsinsekten, umfassend mindestens eine Vorrichtung (50) zum Anlocken von Insekten gemäß einem der Ansprüche 1 oder 2 und mindestens eine Insektenfalle (10) zum Festhalten, Fangen und/oder Abtöten von angelockten Insekten.

4. Anordnung gemäß Anspruch 3, bei der die Insektenfalle (10) Folgendes umfasst: eine ebene oder gewölbte, helle Fläche; wenigstens eine innerhalb dieser Fläche angeordnete, dunkle Kontraststelle (16); Einrichtungen zum Festhalten, Fangen und/oder Abtöten von angelockten Insekten (42) auf einer Oberfläche (18) der Insektenfalle (10) und/oder in einem darin angeordneten Hohlraum (20).

5. Anordnung gemäß Anspruch 3, bei der die Insektenfalle (10) Folgendes umfasst: eine Ausströmfläche (14) zur Erzeugung einer von der Fläche (14) ausgehenden, schwachen Luftströmung (22), und Einrichtungen zum Festhalten, Fangen und/oder zum Abtöten von angelockten Insekten (42) auf einer Oberfläche (18) der Falle (10) und/oder in einem darin angeordneten Hohlraum (20).

6. Anordnung nach einem der Ansprüche 4 oder 5, **gekennzeichnet durch** einen von der Falle (10) emittierbaren und für die anzulockenden Insekten (42) attraktiven Lockstoff (40).

7. Anordnung nach einem der Ansprüche 4 bis 6, **dadurch gekennzeichnet, dass** die Ausströmfläche (14) der Insektenfalle (10) als helle Fläche (12) mit wenigstens einer innerhalb dieser angeordneten, dunklen Kontraststelle (16) ausgebildet ist.

8. Anordnung nach einem der Ansprüche 4 bis 7, **dadurch gekennzeichnet, dass** wenigstens eine Ansaugöffnung (24) zum Ansaugen von angelockten Insekten (42) in einem Nahbereich der Falle (10) vorgesehen ist.

9. Anordnung nach einem der Ansprüche 4 bis 8, **dadurch gekennzeichnet, dass** eine ringförmige Ansaugöffnung (24) um die helle Fläche (12) bzw. um die Ausströmfläche (14) angeordnet ist.

10. Anordnung nach einem der Ansprüche 4 bis 9, **dadurch gekennzeichnet, dass** die dunkle Kontraststelle (16) als dunkler Ansaugkanal (26) ausgebildet ist.
